# EUROPÄISCHE PATENTANMELDUNG

(11) **EP 2 444 536 A1**
(43) Veröffentlichungstag der Anmeldung: **25.04.2012**
(21) Anmeldenummer: 11179268.5
(22) Anmeldetag: 30.08.2011
(51) Int. Cl.: D04H 1/559, D04H 1/498, B32B 25/10, B32B 27/12, B32B 5/06

(54) **Vliesstofflaminat**

(30) Priorität: 30.08.2010 DE 202010011971 U
(71) Anmelder: Wirth Fulda GmbH, 36043 Fulda (DE)
(72) Erfinder: Freda, Franco, 36124 Eichenzell (DE)
(74) Vertreter: KEIL & SCHAAFHAUSEN Patentanwälte

(57) **Zusammenfassung**

Es wird ein Vliesstofflaminat beschrieben mit einem Nadelvliesstoff, der auf der Ober- und Unterseite mechanisch vernadelt und/oder chemisch verfestigt und/oder thermisch verfestigt ist. Dieses Vliesstofflaminat ist insbesondere für den Einsatz in Waschanlagen mit textilem Waschmaterial vorgesehen, bei dem das Waschmaterial im Wesentlichen aus beweglichen Textilstreifen besteht. Es kann aber auch für andere technische Zwecke bestimmt sein. Um ein Vliesstofflaminat zur Verfügung zu stellen, das insbesondere den Waschprozess in Waschstraßen optimal gestaltet, indem es die Lebensdauer des Waschmaterials und deren Reinigungswirkung optimiert, sowie Beschädigungen des Lacks weitgehend ausschließt, ist vorgesehen, dass jeweils ein Nadelvliesstoff auf der Ober- und Unterseite einer dünnen Folie aus Kunststoff- und/oder synthetischem Kautschuk (Mittelschicht des Vliesstofflaminats) aufgebracht und mit dieser flächig verbunden ist.

## Beschreibung

Die Erfindung betrifft ein Vliesstofflaminat mit einem Nadelvliesstoff, der auf der Ober- und Unterseite mechanisch vernadelt und/oder chemisch verfestigt und/oder thermisch verfestigt ist, insbesondere für den Einsatz in Waschanlagen mit textilem Waschmaterial, bei dem das Waschmaterial im Wesentlichen aus beweglichen Textilstreifen besteht, und wobei das Vliesstofflaminat auch für andere technische Zwecke verwendbar ist.

Als Vliesstofflaminate bezeichnet man mehrschichtige flexible Flächengebilde, bei denen mindestens eine Schicht aus Vliesstoff besteht. In Waschstraßen besteht das textile Waschmaterial häufig aus beweglichen Textilstreifen, auch Lappen genannt, die aus einem genadelten Vliesstoff bestehen, der in ein Gewebe eingebaut ist. Durch die Vernadlung des Vlieses wird das Gewebe jedoch "angeritzt" und damit geschwächt. Um aus dem Vliesstofflaminat bewegliche Textilstreifen von etwa 1 bis 2 cm Breite herzustellen, wird das Gewebe entsprechend eingeschnitten. Das wiederum hat zur Folge, dass die Belastung während des Betriebs der Waschstraße auf eine kleine Fläche einwirkt. Dies wiederum bedeutet eine hohe mechanische Belastung für die textile Flächenware, die in Waschanlagen derzeit für etwa 40.000 bis 50.000 Wachvorgänge verwendet werden.

Aufgabe der vorliegenden Erfindung ist es daher, ein Vliesstofflaminat zur Verfügung zu stellen, das insbesondere den Waschprozess in Waschstraßen optimal gestaltet, indem es die Lebensdauer des Waschmaterials und deren Reinigungswirkung optimiert, sowie Beschädigungen des Lacks weitgehend ausschließt.

Diese Aufgabe wird erfindungsgemäß dadurch gelöst, dass jeweils ein Nadelvliesstoff auf der Ober- und Unterseite einer dünnen Folie aus Kunststoff- und/oder synthetischem Kautschuk (Mittelschicht des Vliesstofflaminats) aufgebracht und mit dieser flächig verbunden ist. Damit besteht das Trägerelement für den Nadelvliesstoff nicht aus einem Gewebe, sondern aus einer dünnen Folie aus Kunststoff oder synthetischem Kautschuk. Mit einem solchen Material lassen sich die beweglichen Textilstreifen für weit mehr als die bisher üblichen 40.000 bis 50.000 Waschvorgänge verwenden. Außerdem wird bei diesem Vliesstofflaminat die Wasseraufnahme des waschaktiven Materials verringert.

Die Vorteile derartiger Vliesstofflaminate zeigen sich auch bei der Verwendung in der Automobilindustrie im Auskleidungsbereich Interieur/Exterieur oder in der Glasindustrie als Glaszuschneideunterlage. Je nach Einsatzzweck werden dabei unterschiedliche Vliesstoffmaterialien verwendet.

Die aus Kunststoff- und/oder synthetischem Kautschuk bestehende Mittelschicht des Vliesstofflaminats ist erfindungsgemäß durch Vulkanisation und/oder Klebekaschierung und/oder Vernadlung bzw. Vernähung und/oder Verschweißen und/oder Laminieren mit dem Nadelvliesstoff verbunden. Auf diese Weise wird ein strapazierfähiges Faserflächengebilde mit einer Mittelschicht aus Kunststoff oder einem synthetischem Kautschuk (Gummi) geschaffen, das die Waschleistung sowie die Lebensdauer herkömmlicher Textilstreifen weit übertrifft.

Eine besonders gute Verbindung lässt sich gemäß einer bevorzugten Ausgestaltung der Erfindung dadurch erreichen, dass die Fasern des Nadelvliesstoffes direkt in die Kunststoff- und/oder synthetische Kautschukmasse der Mittelschicht des Vliesstofflaminats eingelassen sind. Damit ist der Vliesstoff einstückig mit dem Kunststoff bzw. der synthetische Kautschukmasse verbunden.

Es hat sich als vorteilhaft erwiesen, dass der/die Nadelvliesstoff(e) aus einer Polypropylen-Faser und/oder Polyester-Faser und/oder Polyethylen-Faser und/oder Polyamid 6-Faser und/oder Polyamid 6.6-Faser und/oder Viskose Faser und/oder Co-PES-Faser und/oder Co-PA-Faser im Feinheitsbereich zwischen 0,9dtex und 140dtex und einer Stapellänge zwischen 10mm und 120mm bestehen.

Die Mittelschicht des Vliesstofflaminats besteht zweckmäßigerweise aus synthetischem Kautschuk [Ethylen-Propylen-Kautschuk/Ethylen-Propylen-Terpolymere -Kautschuk (EPM/EPDM) und/oder Styrol-Butadien-Kautschuk (SBR) und/oder Butadien-Acrylnitril-Kautschuk (NBR) und/oder Silikon Kautschuk (Q) und/oder Chloropren Kautschuk (CR) und/oder Fluor Kautschuk (FPM) und/oder Isobutylen-Isoprene Kautschuk (IIR) ] und/oder aus Kunststoff (PVC, PP, PES, PA ,PU etc.), welcher im Härtebereich zwischen 10 und 100 Shore liegt.

Die Nadelvliesstoffe des Vliesstofflaminats können gemäß einer weiteren Ausführungsform der Erfindung auch durch Nonwoven und/oder Gewebe und/oder synthetisches Leder ersetzt werden.

In Weiterbildung dieses Erfindungsgedankens können in dem Vliesstofflaminat neben der Ober- und Unterschicht aus Nadelvliesstoff oder dgl. und der Mittelschicht aus Kunststoff- und/oder synthetischem Kautschuk noch weitere Materialschichten eingebracht sein, wodurch ein mehrschichtiges Laminat erzeugt wird.

Es hat sich als besonders vorteilhaft erwiesen, dass die Mittelschicht aus Kunststoff und/oder synthetischem Kautschuk durch Vliesstoffe und/oder Gelege und/oder Gewebe und/oder Fasern/Fäden verstärkt wird.

Das erfindungsgemäße Vliesstofflaminat lässt sich nicht nur als bewegliche Textilstreifen zur Reinigung von Kraftfahrzeugen in Waschanlagen wie Autowaschstraßen oder Portalwaschanlagen verwenden, sondern auch zum Auskleiden von Kraftfahrzeugen, Flugzeugen und/oder Schiffen oder als Glaszuschneideunterlage in der Glasindustrie.

Es bedarf keiner weiteren Ausführungen, dass die Verwendung des erfindungsgemäßen Vliesstofflaminats nicht auf die genannten Verwendungszwecke beschränkt ist, sondern dass es auch in anderen technischen Bereichen verwendet werden kann.

## Patentansprüche

1. Vliesstofflaminat mit einem Nadelvliesstoff, der auf der Ober- und Unterseite mechanisch vernadelt und/oder chemisch verfestigt und/oder thermisch verfestigt ist, insbesondere für den Einsatz in Waschanlagen mit textilem Waschmaterial, bei dem das Waschmaterial im Wesentlichen aus beweglichen Textilstreifen besteht, und wobei das Vliesstofflaminat auch für andere technische Zwecke verwendbar ist, **dadurch gekennzeichnet, dass** jeweils ein Nadelvliesstoff auf der Ober- und Unterseite einer dünnen Folie aus Kunststoff- und/oder synthetischem Kautschuk (Mittelschicht des Vliesstofflaminats) aufgebracht und mit dieser flächig verbunden ist.

2. Vliesstofflaminat nach Anspruch 1, **dadurch gekennzeichnet, dass** die aus Kunststoff- und/oder synthetischem Kautschuk bestehende Mittelschicht des Vliesstofflaminats durch Vulkanisation und/oder Klebekaschierung und/oder Vernadelung bzw. Vernähung und/oder Verschweißen und/oder Laminieren mit dem Nadelvliesstoff verbunden ist.

3. Vliesstofflaminat nach Anspruch 1 oder 2, **dadurch gekennzeichnet, dass,** dass die Fasern des Nadelvliesstoffes direkt in die Kunststoff- und/oder synthetische Kautschukmasse der Mittelschicht des Vliesstofflaminats eingelassen sind.

4. Vliesstofflaminat nach einem der Ansprüche 1 bis 3, **dadurch gekennzeichnet, dass** der/die Nadelvliesstoff(e) aus einer Polypropylen-Faser und/oder Polyester-Faser und/oder Polyethylen-Faser und/oder Polyamid 6-Faser und/oder Polyamid 6.6-Faser und/oder Viskose Faser und/oder Co-PES-Faser und/oder Co-PA-Faser im Feinheitsbereich zwischen 0,9dtex und 140dtex und einer Stapellänge zwischen 10mm und 120mm bestehen.

5. Vliesstofflaminat nach einem der Ansprüche 1 bis 3, **dadurch gekennzeichnet, dass** die Mittelschicht des Vliesstofflaminats aus synthetischem Kautschuk [Ethylen-Propylen-Kautschuk/Ethylen-Propylen-Terpolymere-Kautschuk (EPM/EPDM) und/oder Styrol-Butadien-Kautschuk (SBR) und/oder Butadien-Acrylnitril-Kautschuk (NBR) und/oder Silikon Kautschuk (Q) und/oder Chloropren Kautschuk (CR) und/oder Fluor Kautschuk (FPM) und/oder Isobutylen-Isoprene Kautschuk (IIR) ] und/oder aus Kunststoff (PVC, PP, PES, PA ,PU etc.) besteht, welcher im Härtebereich zwischen 10 und 100 Shore liegt.

6. Vliesstofflaminat nach einem der Ansprüche 1 bis 4, **dadurch gekennzeichnet, dass** die Nadelvliesstoffe des Vliesstofflaminats durch Nonwoven und/oder Gewebe und/oder synthetisches Leder ersetzt werden.

7. Vliesstofflaminat nach einem der vorhergehenden Ansprüche, **dadurch gekennzeichnet, dass** neben der Ober- und Unterschicht aus Nadelvliesstoff oder dgl. und der Mittelschicht aus Kunststoff- und/oder synthetischem Kautschuk noch weitere Materialschichten eingebracht werden, wodurch ein mehrschichtiges Laminat erzeugt wird.

8. Vliesstofflaminat nach einem der vorhergehenden Ansprüche, **dadurch gekennzeichnet, dass** die Mittelschicht aus Kunststoff und/oder synthetischem Kautschuk durch Vliesstoffe und/oder Gelege und/oder Gewebe und/oder Fasern/Fäden verstärkt wird.

9. Verwendung des nach einem der vorhergehenden Ansprüche hergestellten Vliesstofflaminats als beweglicher Textilstreifen zur Reinigung von Kraftfahrzeugen in Waschanlagen wie Autowaschstraßen oder Portalwaschanlagen.

10. Verwendung des nach einem der Ansprüche 1 bis 8 hergestellten Vliesstofflaminats zum Auskleiden von Kraftfahrzeugen, Flugzeugen und/oder Schiffen.

11. Verwendung des nach einem der Ansprüche 1 bis 8 hergestellten Vliesstofflaminats als Glaszuschneideunterlage in der Glasindustrie.
